# EUROPEAN PATENT APPLICATION

(11) **EP 4 503 356 A1**
(43) Date of publication of application: **05.02.2025**
(21) Application number: 24192071.9
(22) Date of filing: 31.07.2024
(51) Int. Cl.: H02G 1/00, H02G 1/12, H02G 1/14, H02G 15/013, H02G 15/113

(54) **AUTOMATED CABLE SPLICING SYSTEM AND METHOD**

(30) Priority: 31.07.2023 US 202363516775 P
(71) Applicant: ULC Technologies, LLC, Hauppauge, NY 11788 (US)
(72) Inventor: CARADONNA, Austin, Massapequa (US); HERMAN, Jason, Hauppauge (US); KURILOFF, Jonathan, St. James (US)
(74) Representative: Viering, Jentschura & Partner mbB Patent- und Rechtsanwälte

(57) **Abstract**

An automated cable preparation device including a carriage assembly, a mechanical splice installation tool, a cable shell installation apparatus, a sealant injection tool, and a processor is provided. The mechanical splice installation tool includes a splice actuator. The mechanical splice installation tool is coupled to the carriage assembly. The cable shell installation apparatus includes a cable shell actuator. The cable shell installation apparatus is coupled to the carriage assembly. The sealant injection tool is coupled to the carriage assembly. The processor is in communication with the splice actuator, the cable shell actuator, and the sealant injection tool. The processor is configured to selectively control the mechanical splice installation tool to deposit a mechanical splice joint onto an exposed conductor of an electrical cable, selectively control the cable shell installation apparatus to install a cable shell onto the electrical cable, and selectively control the sealant injection tool to inject a sealant into the installed cable shell.

## Description

### CROSS-REFERENCE TO RELATED APPLICATION

This application claims priority to U.S. Provisional Application Serial No. 63/516,775, filed on July 31, 2023, the disclosure of which is hereby incorporated by reference in its entirety.

### BACKGROUND

Medium voltage cables are commonly used in below-ground applications, ground-level applications, and at the top of electric poles for the delivery of electric power in a distribution network system. Medium voltage cables often need to be terminated and prepared in order to repair the cables or to install accessories in the field. Historically, cable preparation is performed manually, which is labor intensive, time consuming, and can lead to errors. A high degree of dexterity is required, the process requires many steps, and many different input materials are also required. Accordingly, an improved system and method for the preparation and termination of medium voltage cables would be beneficial.

### SUMMARY

Some embodiments provide an automated cable preparation device including a carriage assembly, a mechanical splice installation tool, a cable shell installation apparatus, a sealant injection tool, and a processor. The mechanical splice installation tool includes a splice actuator. The mechanical splice installation tool is coupled to the carriage assembly. The cable shell installation apparatus includes a cable shell actuator. The cable shell installation apparatus is coupled to the carriage assembly. The sealant injection tool is coupled to the carriage assembly. The processor is in communication with the splice actuator, the cable shell actuator, and the sealant injection tool. The processor is configured to selectively control the mechanical splice installation tool to deposit a mechanical splice joint onto an exposed conductor of an electrical cable, selectively control the cable shell installation apparatus to install a cable shell onto the electrical cable, and selectively control the sealant injection tool to inject a sealant into the installed cable shell.

In some embodiments, the carriage assembly is coupled to a rotational actuator that is configured to rotate the carriage assembly about a longitudinal axis. The carriage assembly can include a tool plate that is axially movable. The carriage assembly can include a first portion hingedly connected to a second portion, and the tool plate can include a third portion hingedly connected to a fourth portion. One or more of the mechanical splice installation tool, the cable shell installation apparatus, or the sealant injection tool is coupled to the tool plate. The cable shell can include a shell shield layer and one or more spikes that are configured to electrically connect the shell shield layer to a grounded shield layer of the electrical cable. The cable shell installation apparatus can include an air relief port. The cable shell installation apparatus can include one or more of a vacuum or vibration mechanism to assist in removing air bubbles from the sealant injected into the cable shell.

In some embodiments, the automated cable preparation device includes a cutting tool coupled to the tool plate. The cutting tool can include a cable cutter and a cutting actuator in communication with the processor. The processor can be configured to selectively control the cutting tool to cut through at least one layer of the electrical cable and expose the conductor of the electrical cable. The automated cable preparation device can include a motor coupled to the carriage assembly and in communication with the processor. The processor can be configured to selectively control the cutting tool and the motor to circumferentially cut the electrical cable. The rotational actuator can be in a planetary gear arrangement with a chassis. The carriage assembly can include a first end plate and a second end plate. The tool plate can be disposed between the first end plate and the second end plate. A connecting rod can connect the first end plate and the second end plate.

Some embodiments provide a method of preparing and splicing an electrical cable. The method can include the steps of providing an automated cable preparation device having a carriage assembly, a mechanical splice installation tool, a cutting tool, a cable shell installation apparatus, and a sealant injection tool, positioning the automated cable preparation device around the electrical cable and at least partially enclosing the electrical cable, cutting into one or more outer layers of the electrical cable to expose a conductor, depositing a mechanical splice joint onto the conductor, installing a cable shell onto the electrical cable around the deposited mechanical splice joint, and injecting a sealant into the cable shell.

In some embodiments, the mechanical splice joint includes an installation rod, and the method further includes detaching the installation rod from the mechanical splice joint. The method can further include hingedly opening the carriage assembly to position the automated cable preparation device around the electrical cable.

Some embodiments provide an automated cable preparation system having a processor and a user interface. The processor can be configured to instruct a rotational actuator to rotate a carriage about an electrical cable, instruct a tool plate actuator to move a tool plate axially relative to the carriage, and instruct a mechanical splice installation tool to clamp a splice joint around an exposed conductor of the electrical cable. The mechanical splice installation tool can be supported by the tool plate. The user interface can be in communication with the processor via one or more of a wired connection or a wireless connection. The user interface can be configured to receive control inputs for the mechanical splice installation tool that are wirelessly transmitted to the processor for execution. In some embodiments, the user interface is a mobile device in communication with the processor via a cloud network.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 illustrates a cross-sectional view of a conventional medium voltage cable;
FIGS. 2A and 2B illustrate top and bottom isometric views, respectively, of an automated cable preparation device according to an embodiment;
FIG. 3A illustrates a top isometric view of a carriage assembly of the automated cable preparation device of FIGS. 2A and 2B in a first closed position;
FIG. 3B illustrates a top isometric view of the carriage assembly of FIG. 3A in a second open position;
FIG. 3C illustrates a top isometric view of the carriage assembly of FIG. 3A with a tool plate located in a first position;
FIG. 3D illustrates a top isometric view of the carriage assembly of FIG. 3A with the tool plate located in a second position;
FIG. 4 illustrates the tool plate of FIGS. 2A and 2B;
FIG. 5A illustrates the carriage assembly of FIG. 3A with a cutting tool having a cable cutter in a retracted position;
FIG. 5B illustrates the carriage assembly of FIG. 3A with the cutting tool having the cable cutter in a first extended position;
FIG. 5C illustrates the carriage assembly of FIG. 3A with the cutting tool having the cable cutter in a second extended position;
FIG. 6A illustrates the carriage assembly of FIG. 3A with a mechanical splice installation tool in a retracted position;
FIG. 6B illustrates the carriage assembly of FIG. 3A with the mechanical splice installation tool in an extended position;
FIG. 7A illustrates the carriage assembly of FIG. 3A with a cable shell installation apparatus in a retracted position;
FIG. 7B illustrates the carriage assembly of FIG. 3A with the cable shell installation apparatus in an extended position;
FIG. 8A illustrates an isometric view of a medium voltage cable having been spliced according to methods described herein;
FIG. 8B illustrates a cross-sectional isometric view of the medium voltage cable having been spliced according to methods described herein taken along line A-A of FIG. 8A; and
FIG. 9 illustrates a cross-sectional view of the medium voltage cable of FIG. 8A taken along line B-B of FIG. 8A.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to the embodiments shown but are to be accorded the widest scope consistent with the principles and features disclosed herein. The figures, which are not necessarily to scale, depict selected embodiments and are not intended to limit the scope of embodiments of the invention. Skilled artisans will recognize that the examples provided herein have many useful alternatives that fall within the scope of embodiments of the invention.

It is to be understood that the phraseology and terminology used herein are for the purpose of description and should not be regarded as limiting. For example, the use of "including," "comprising," or "having" and variations thereof herein is meant to encompass the items listed thereafter and equivalents thereof, as well as additional items. As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

As noted above, the manual preparation and splicing of conventional medium voltage cables can be cumbersome and prone to operator error. Accordingly, it would be useful to provide an automated system and method for preparing and splicing cables that is consistent, reproducible, fast, and durable in various environments.

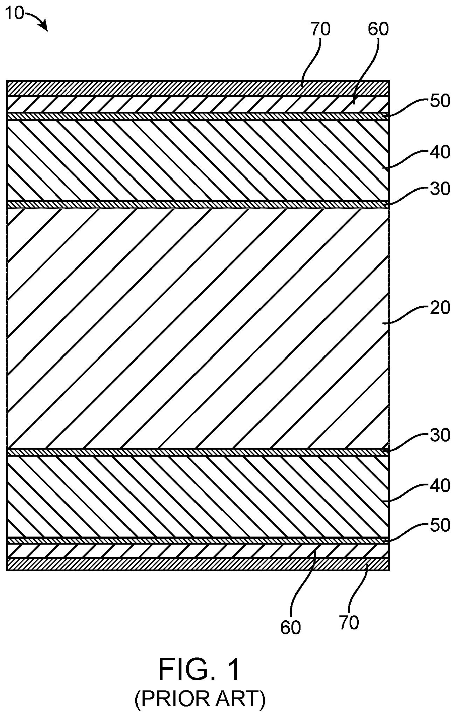

FIG. 1 illustrates a conventional medium voltage cable 10 for the delivery of electric power in a distribution network. The medium voltage cable 10 includes a conductor 20, a first semiconductor layer 30, an insulator layer 40, a second semiconductor layer 50, a grounded shield layer 60, and an outer insulating jacket 70.

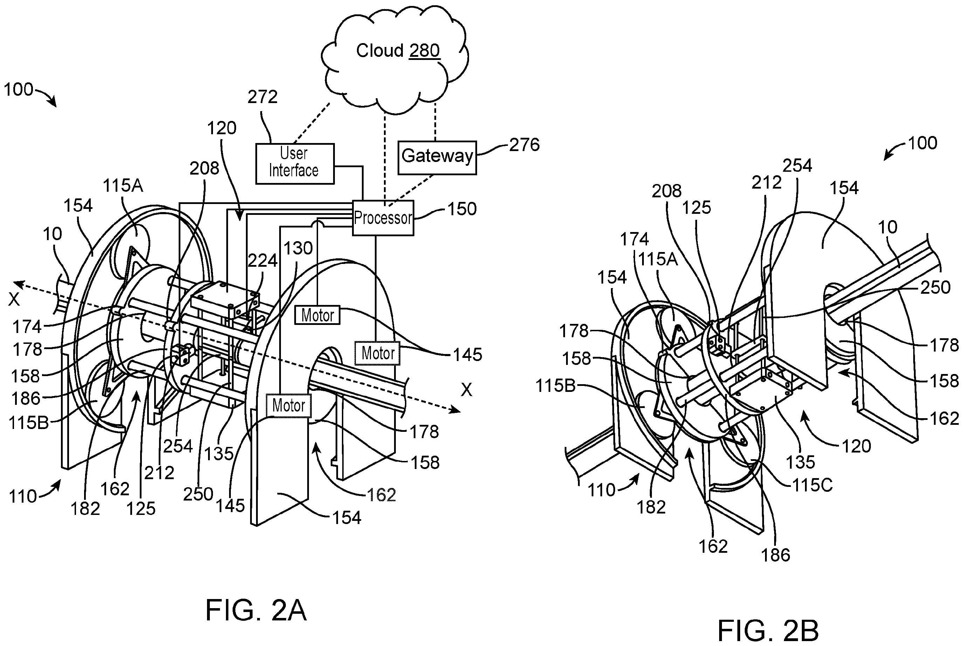

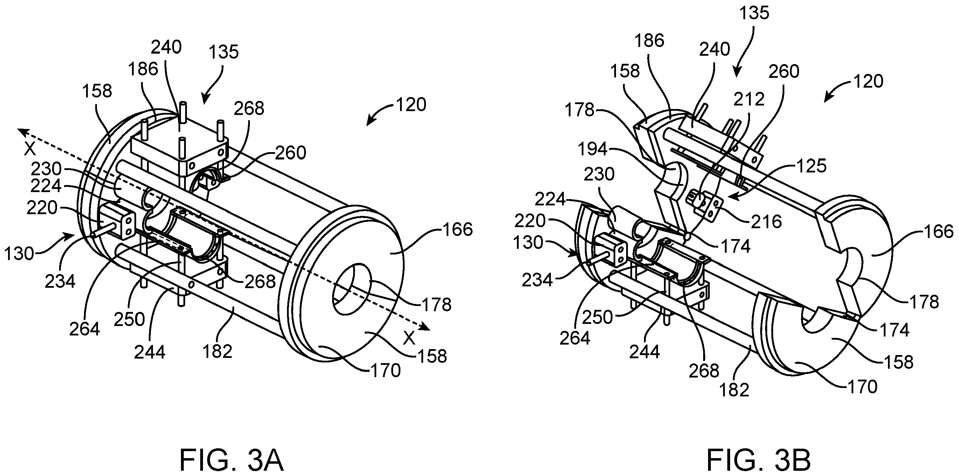

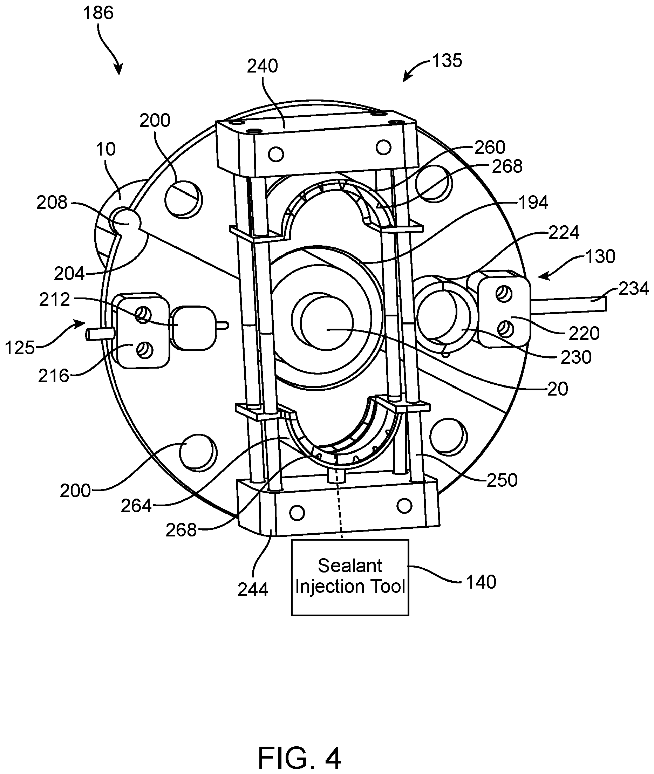

FIGS. 2A and 2B illustrate an automated cable preparation device 100 according to one embodiment. The automated cable preparation device 100 includes a chassis 110, one or more rotational actuators 115A, 115B, 115C, a carriage assembly 120, a cutting tool 125 (see also FIGS. 3A-4), a mechanical splice installation tool 130, a cable shell installation apparatus 135, a sealant injection tool 140 (see FIG. 4), at least one motor 145, and a processor 150. For the purpose of defining and describing the present disclosure, it is noted that the term "processor" generally means a device that executes functions according to machine-readable instructions or that has been configured to execute functions in a manner analogous to machine-readable instructions, such as an integrated circuit, a microchip, a computer, a central processing unit, a graphics processing unit, field-programmable gate array (FPGA), an application-specific integrated circuit (ASIC), or any other computation device. Additionally, it is noted that the term "memory," as used herein, generally means one or more apparatus capable of storing data or machine-readable instructions for later retrieval, such as, but not limited to, RAM, ROM, flash memory, hard drives, or combinations thereof.

The chassis 110 can include two chassis end plates 154 that surround the carriage end plates 158 of the carriage assembly 120. In some forms, the chassis end plates 154 can be selectively coupled to one another via a base plate, one or more rods, or one or more chassis linear actuators to move the chassis end plates 154 toward and away from the carriage assembly 120 and to secure the carriage assembly 120 between the chassis end plates 154. Each chassis end plate 154 can include a slot 162 such that the chassis 110 can be placed over the top of (or under, over the side of, etc.) the medium voltage cable 10 without having to disrupt the medium voltage cable 10 at the location over which the chassis end plate 154 is placed. In some embodiments, the base plate, rods, or linear actuators connecting the chassis end plates 154 can be coupled to the chassis end plates 154 after the medium voltage cable 10 has been inserted into the slots 162.

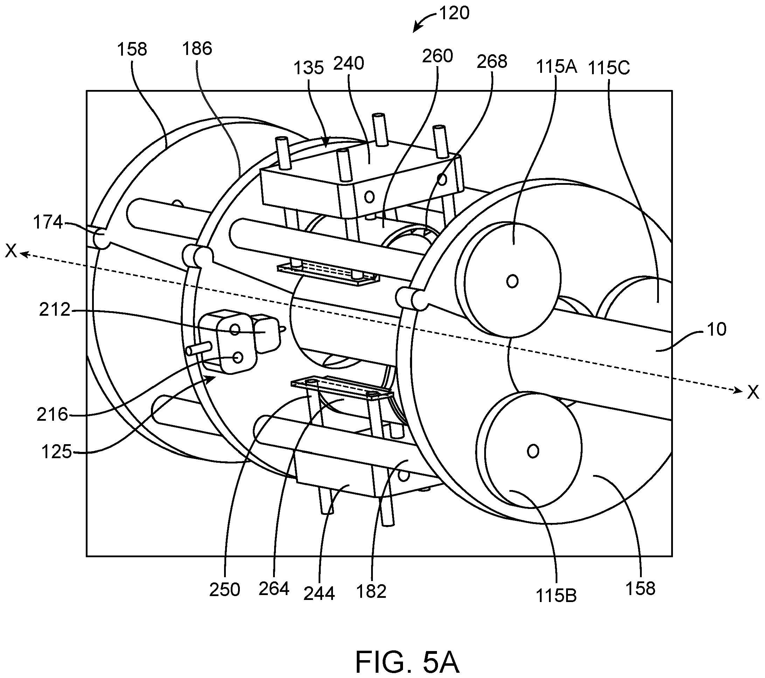

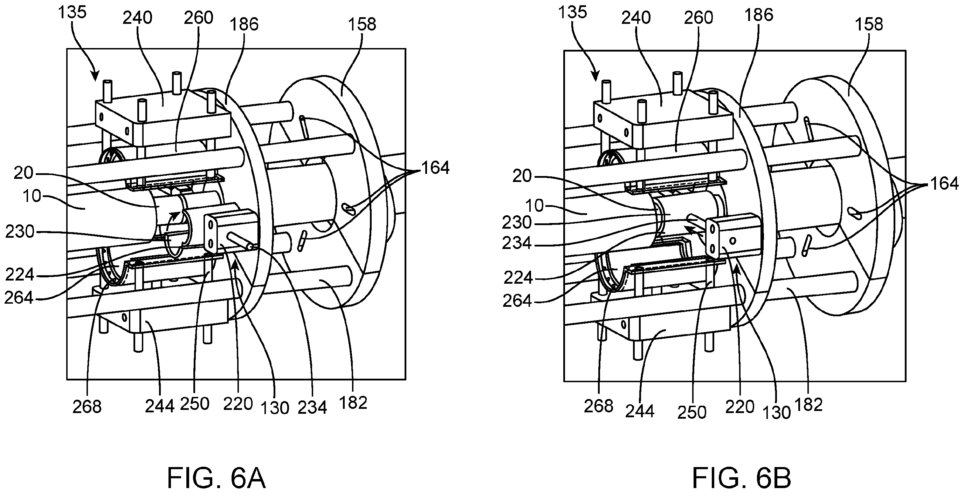

The one or more rotational actuators 115A, 115B, 115C, can be coupled to one or more motors 145 such that the one or more motors 145 can drive the one or more rotational actuators 115A, 115B, 115C, to rotate the carriage assembly 120 along a longitudinal axis X-X and around the medium voltage cable 10. In some forms, the rotational actuators 115A, 115B, 115C, are provided in the form of disc-shaped rollers. In some forms, the rotational actuators 115A, 115B, 115C can be provided in the form of gears. Further, the rotational actuators 115A, 115B, 115C can work together with other structures of the chassis end plates 154 and the carriage assembly 120 to provide a planetary gear arrangement for rotational movement of the carriage assembly 120. In some embodiments, the rotational actuators 115A, 115B, 115C can be provided as part of the carriage assembly 120 and can provide rotational movement of the carriage assembly 120 with respect to the medium voltage cable 10 (see FIGS. 5A-7B). Other rollers may also be provided to center the medium voltage cable 10 with respect to the carriage assembly 120. A plurality of roller slots 164 can also be provided (see FIGS. 6A and 6B) for manually, or in an automated fashion, moving various rollers radially toward and away from the medium voltage cable 10 to secure and center the medium voltage cable 10 with respect to the carriage assembly 120.

In some forms, only a single motor 145 drives only a single rotational actuator 115A on one or both of the chassis end plates 154 in order to rotate the carriage assembly 120. Accordingly, multiple other rotational actuators 115B, 115C can be passive and merely provide stability for the carriage assembly 120 as it rotates. In some other forms, other structures can be provided with the chassis 110 to provide support for the carriage assembly 120 as it rotates, such as rotational bearings, cradles, gear assemblies, and the like. In some other forms, multiple motors 145 can drive multiple rotational actuators 115A, 115B, 115C in order to rotate the carriage assembly 120. In some embodiments, a single motor 145 can drive multiple rotational actuators 115A, 115B, 115C via a gear assembly. The foregoing configurations and other variations are contemplated to provide rotational movement to the carriage assembly 120. For example, one or more sprockets and roller chains can be provided in order to control rotational movement of the carriage assembly 120.

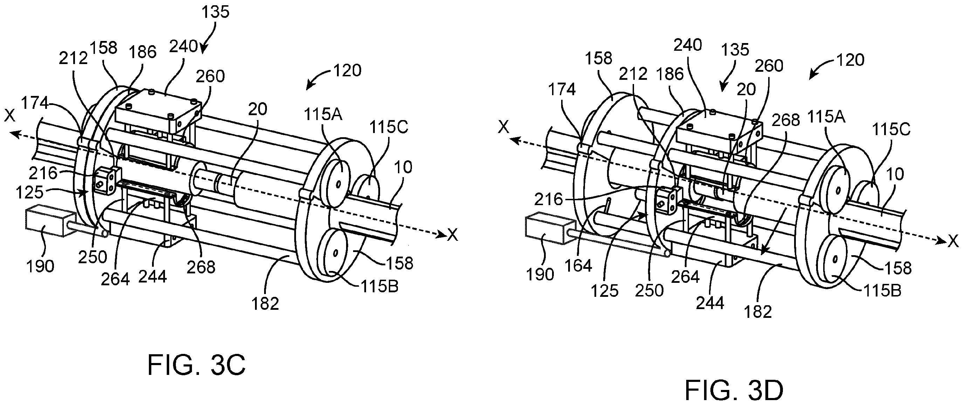

FIGS. 3A and 3B illustrate the carriage assembly 120 in two different positions. For example, in FIG. 3A, the carriage assembly 120 is illustrated in a first closed position, and in FIG. 3B, the carriage assembly 120 is illustrated in a second hingedly open position. The carriage assembly 120 can include a first frame portion 166 and a second frame portion 170 that are coupled together by a hinge structure 174. Accordingly, the first frame portion 166 and the second frame portion 170 are selectively, hingedly, separable from one another in a clamshell-style configuration. In this way, the carriage assembly 120 can be opened and positioned around the medium voltage cable 10 without having to cut through or disrupt the medium voltage cable 10. The carriage assembly 120 can include two carriage end plates 158, which have carriage end plate bores 178, one or more connecting rods 182 that couple the carriage end plates 158 together, and a tool plate 186. As shown best in FIG. 3C and 3D, the tool plate 186 is movable along the length of the one or more connecting rods 182 and along the longitudinal axis X-X of the carriage assembly 120 between the two carriage end plates 158. The tool plate 186 can be moved by, for example, a tool plate actuator 190, which can be provided in the form of a linear actuator.

In FIG. 4, the tool plate 186 is illustrated in detail. The tool plate 186 can include a center tool plate bore 194 and one or more holes 200 corresponding to the one or more connecting rods 182 of the carriage assembly 120. In some forms, the holes 200 are outfitted with linear bearings to provide smooth linear movement of the tool plate 186 between the carriage end plates 158. As shown, the tool plate 186 itself can include a seam 204 and a hinge 208 such that the tool plate 186 can selectively hingedly separate along the seam 204 in a movement corresponding to the clamshell-style configuration of the carriage assembly 120 as a whole. The tool plate 186 can include the cutting tool 125, the mechanical splice installation tool 130, the cable shell installation apparatus 135, and a sealant injection tool 140.

The cutting tool 125 can include a cable cutter 212 and at least one cutting actuator 216. The cable cutter 212 can be provided as one or more instruments that can score, cut, saw, or strip various layers of the medium voltage cable 10 via a mechanical cutting mechanism or heating mechanism. For example, the cutting tool 125 can be configured to cut through and strip the outer insulating j acket 70, the grounded shield layer 60, the second semiconductor layer 50, the insulator layer 40, and the first semiconductor layer 30 of the medium voltage cable 10. In some forms, the cutting tool 125 can also cut a portion of, or through the entire diameter of, the conductor 20 if needed. The cutting actuator 216 can be coupled to the tool plate 186 and can be configured to provide controlled, radial movement of the cable cutter 212 toward and away from the medium voltage cable 10.

The mechanical splice installation tool 130 can include a splice actuator 220, which can be outfitted with a selectively depositable splice joint 224. The splice actuator 220 can be coupled to the tool plate 186 and can be configured to provide controlled, radial movement of the splice joint 224 toward and away from the medium voltage cable 10. Further, the splice actuator 220 can be configured to provide a controlled means of installing the splice joint 224. For example, the splice joint 224 can be provided in the form of a selectively openable and closable cylindrical shell 230 with an installation rod 234. The splice actuator 220 can include a mechanism that pushes, pulls, or otherwise causes the closable cylindrical shell 230 of the splice joint 224 to close. The splice actuator 220 can also include a mechanism to detach the installation rod 234 from the closable cylindrical shell 230. For example, the splice actuator 220 can rotate to physically break the installation rod 234 off the cylindrical shell 230, or the splice actuator 220 can include a heating or cutting mechanism to remove the installation rod 234 from the cylindrical shell 230. The mechanical splice installation tool 130 can also include a mechanism for applying heated pellets of conductive material, or the mechanical splice installation tool 130 can include a welding mechanism to securely couple the splice joint 224 to the exposed conductor 20.

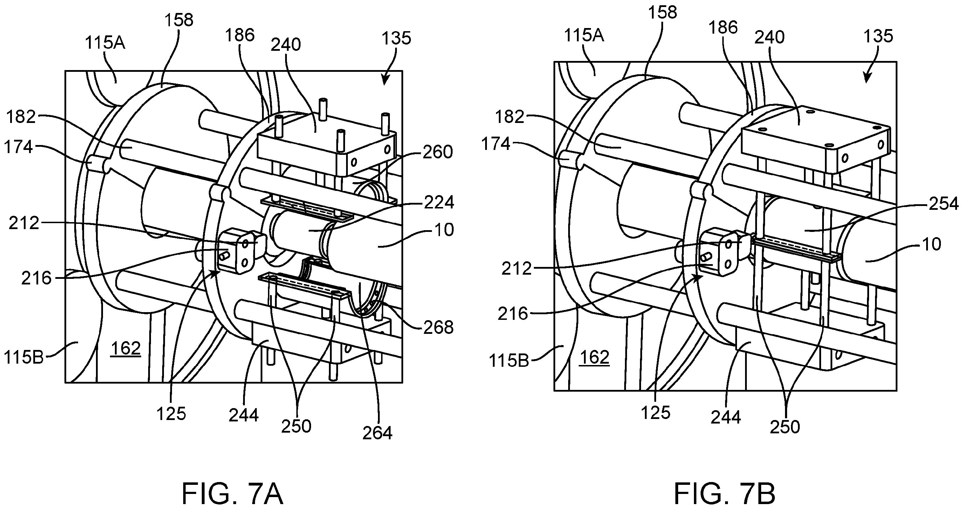

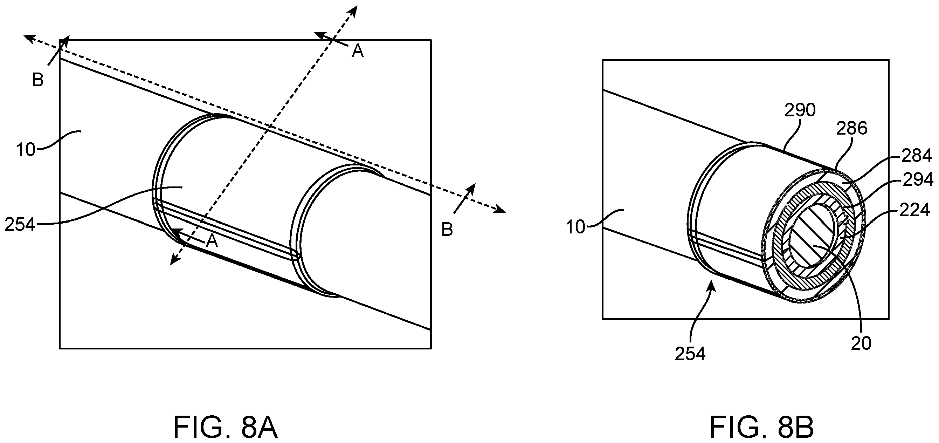

Referring further to FIG. 4, the cable shell installation apparatus 135 can also be coupled to the tool plate 186. The cable shell installation apparatus 135 can include an upper portion 240, a lower portion 244, and one or more shell installation rods 250. A cable shell 254 (see FIGS. 7B and 8A) can be provided on the cable shell installation apparatus 135 for installation onto the medium voltage cable 10. The cable shell 254 can include an upper cable shell portion 260 and a lower cable shell portion 264, each having one or more holes corresponding to the shell installation rods 250. In some forms, one or both of the upper portion 240 and the lower portion 244 of the cable shell installation apparatus 135 can include a cable shell actuator provided in the form of a linear actuator that is configured to move the upper cable shell portion 260 and the lower cable shell portion 264 along the shell installation rods 250 and clamp the upper cable shell portion 260 and the lower cable shell portion 264 together around the outside of the medium voltage cable 10. In some forms, one or both of the upper portion 240 and the lower portion 244 can also include a fastening mechanism that can install a fastening element that couples the upper cable shell portion 260 and the lower cable shell portion 264 together to form the fastened cable shell 254 (see FIGS. 7B and 8A). For example, the fastening mechanism can install screws, nuts, rivets, or other mechanical fasteners to securely clamp the upper cable shell portion 260 to the lower cable shell portion 264 around the medium voltage cable 10, thus forming a fastened cable shell 254.

Separately from, or in conjunction with, the cable shell installation apparatus 135, the sealant injection tool 140 can be configured to inject an insulating sealant into the fastened cable shell 254. In some forms, one or both of the upper portion 240 and the lower portion 244 can include a hole into which an injection probe can extend. The injection probe can be in fluid communication with a sealant reservoir. The sealant reservoir can be coupled to one of the cable shell installation apparatus 135, the tool plate 186, the carriage assembly 120, or the chassis 110, or the sealant reservoir can be located remotely from the automated cable preparation device 100. In some forms, one or both of the upper cable shell portion 260 and the lower cable shell portion 264 include an air relief port to release air during the injection of the sealant into the fastened cable shell 254. Also, in some embodiments, the sealant injection tool 140 can include a vacuum mechanism at the air relief port or a vibration mechanism to aid in removing air bubbles from the injected sealant. In some embodiments, one or both of the upper cable shell portion 260 or the lower cable shell portion 264 can include one or more spikes 268 to facilitate the installment of the fastened cable shell 254 onto the medium voltage cable 10.

Referring back to FIG. 2A, the automated cable preparation device 100 can include the processor 150. In some forms, the processor 150 includes a memory. The processor 150 can communicate via a wired or wireless connection with and provide selective control of the rotational actuators 115A, 115B, 115C, the at least one splice actuator 220, the at least one cutting actuator 216, the at least one cable shell installation apparatus 135, the sealant injection tool 140, the one or more chassis linear actuators, the tool plate actuator 190, or the one or more motors 145. In some forms, the processor 150 is in wired or wireless communication with a user interface 272, a gateway 276, and/ or a cloud network 280 on a remote server. Accordingly, users can control various aspects of the rotational actuators 115A, 115B, 115C, the at least one splice actuator 220, the at least one cutting actuator 216, the at least one cable shell installation apparatus 135, the sealant injection tool 140, the one or more chassis linear actuators, or the motor 145 via hardwired control, wired remote control, or wireless remote control. For example, the user interface 272 can be provided in the form of a mobile device into which a user can enter inputs that are wirelessly transmitted to the cloud network 280 and then to the processor 150 for execution by the automated cable preparation device 100.

Accordingly, as will be described further below, the automated cable preparation device 100 can provide an automated method of cutting and stripping various layers of the medium voltage cable 10, depositing the splice joint 224, installing the fastened cable shell 254, and injecting the sealant in order to repair the medium voltage cable 10 or to install electrical device accessories in the field. When the location of the medium voltage cable 10 in need of preparation and splicing is identified, the first step of the automated cable preparation and splicing process is to install the automated cable preparation device 100 around the medium voltage cable 10 such that the location of splicing is positioned between the chassis end plates 154.

To do this, the carriage assembly 120 can be selectively hingedly opened (see FIG. 3B) in order to position the medium voltage cable 10 into the carriage end plate bores 178 and the tool plate bore 194. Then, the carriage assembly 120 can be selectively hingedly closed (see FIG. 3A) around the medium voltage cable 10. In some embodiments, one or more rollers or other mechanical securement structures can be radially actuated toward the medium voltage cable 10 to hold and center the medium voltage cable 10 within the carriage end plate bores 178 and/or the tool plate bore 194.

Next, the slots 162 of the chassis end plates 154 (see FIGS. 2A and 2B) are slid over the medium voltage cable 10. In some forms, the chassis end plates 154 will already be coupled together via a base plate, one or more rods, one or more chassis linear actuators, or another mechanical coupling mechanism. In some other forms, the chassis end plates 154 can be coupled together after each chassis end plate 154 is individually installed around the medium voltage cable 10, e.g., via a base plate, one or more rods, one or more chassis linear actuators, or another mechanical coupling mechanism. The chassis end plates 154 can then be linearly translated such that the rotational actuators 115A, 115B, 115C, become rotationally coupled to the carriage assembly 120 and/or the medium voltage cable 10. Accordingly, the medium voltage cable 10 will be securely positioned and centered within the carriage assembly 120, and the carriage assembly 120 will be mechanically supported by and coupled to the chassis 110. Thus, the automated cable preparation device 100 is installed onto the medium voltage cable 10.

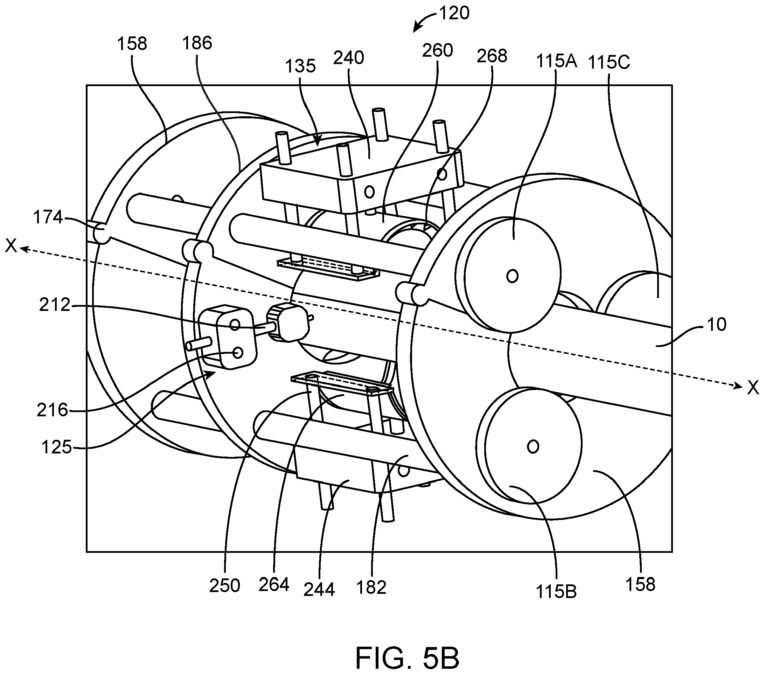

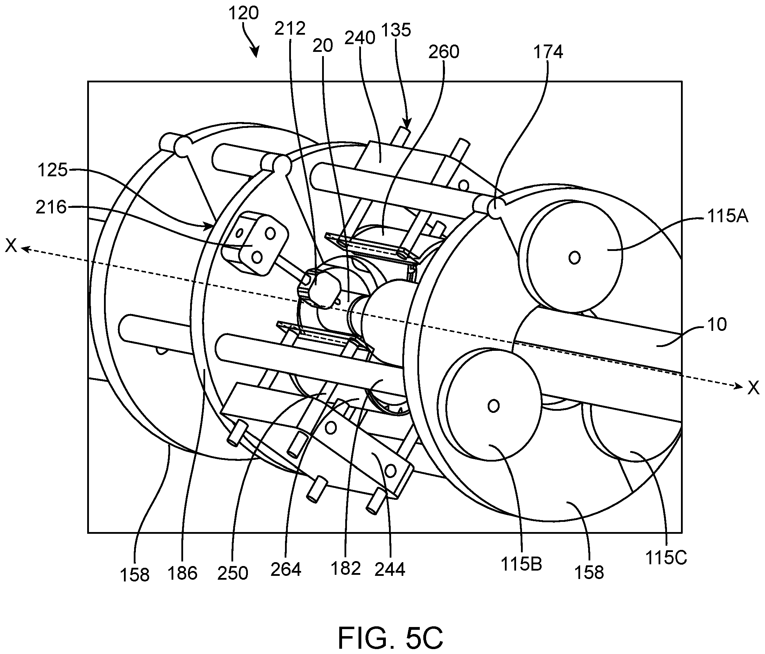

Once the automated cable preparation device 100 is properly installed, the tool plate 186 can be linearly actuated (see FIGS. 3C and 3D) in order to position the cutting tool 125, the mechanical splice installation tool 130, the cable shell installation apparatus 135, and the sealant injection tool 140 over the location of the medium voltage cable 10 in need of preparation and splicing. The cutting actuator 216 can then actuate the cable cutter 212 radially toward the medium voltage cable 10 to begin cutting through the layers of the medium voltage cable 10 and expose the conductor 20. FIGS. 5A-5C illustrate a number of functional positions of the cable cutter 212 during preparation of the medium voltage cable 10. For example, FIG. 5A illustrates the cable cutter 212 in a fully retracted position away from the medium voltage cable 10, FIG. 5B illustrates the cable cutter 212 actuated radially inward in a partially extended position to contact the outer surface of the outer insulating jacket 70 of the medium voltage cable 10, and FIG. 5C illustrates the cable cutter 212 actuated farther radially inward in a second partially extended position to contact the outer surface of conductor 20 of the medium voltage cable 10. In some forms, the cutting actuator 216 is extendable to allow the cutting tool 125 to cut completely through the medium voltage cable 10, including the conductor 20. The rotational actuators 115A, 115B, 115C can control rotational movement of the carriage assembly 120, which aids in the cutting process around the circumference of the medium voltage cable 10.

For example, the position of the carriage assembly 120 in FIGS. 5A and 5B versus the position of the carriage assembly 120 in FIG. 5C illustrates that the carriage assembly 120 can be rotated about the longitudinal axis X-X so that the cable cutter 212 can provide a cutting action around the entire outer circumference of the medium voltage cable 10. Movement of the tool plate 186 along the longitudinal axis X-X can also provide longitudinal cutting capabilities to aid in the stripping and removal of segments of the medium voltage cable 10 that have been circumferentially cut. In some forms, the cutting process is performed layer by layer such that the outer insulating jacket 70, the grounded shield layer 60, the second semiconductor layer 50, the insulator layer 40, or the first semiconductor layer 30 can be individually cut and stripped away from the medium voltage cable 10. In some forms, the cable cutter 212 is configured to cut straight down the conductor 20 in one pass. The controlled movement provided by the tool plate actuator 190 (see FIGS. 3C and 3C) and the cutting actuator 216 allows for precision cutting at substantially 90-degree angles to the outer surface of the medium voltage cable 10 at the location of the medium voltage cable 10 in need of preparation and splicing.

After various layers of the medium voltage cable 10 are stripped to expose the conductor 20, the mechanical splice installation tool 130 can be used to install the splice joint 224. As shown in FIGS. 6A and 6B, the splice actuator 220 can be radially extended inward toward the medium voltage cable 10 in order to deposit the splice joint 224 onto the exposed conductor 20. The splice actuator 220 can then close the closable cylindrical shell 230 of the splice joint 224 over the exposed conductor 20. Finally, the splice actuator 220 can then detach the installation rod 234 from the closable cylindrical shell 230. As explained above, the mechanical splice installation tool 130 can also be configured to securely couple the splice joint 224 to the exposed conductor 20 by way of applying heated pellets of conductive material or by using a welding mechanism as two non-limiting examples.

Once the splice joint 224 is properly coupled to the exposed conductor 20, the cable shell 254 can be clamped and secured around the medium voltage cable 10 via the cable shell installation apparatus 135. FIG. 7A illustrates the upper cable shell portion 260 and the lower cable shell portion 264 in a first position retracted toward the upper portion 240 and the lower portion 244 of the cable shell installation apparatus 135, respectively. In FIG. 7B, the cable shell actuator has clamped the upper cable shell portion 260 and the lower cable shell portion 264 around the medium voltage cable to form a fastened cable shell 254, such that the spikes 268 are protruding into one or more layers of the medium voltage cable 10, and the upper cable shell portion 260 and the lower cable shell portion 264 are mechanically fastened together. With the fastened cable shell 254 properly formed around the medium voltage cable 10, a void is formed between a cable shell inner layer 284 and the conductor 20/splice joint 224.

Accordingly, the sealant can then be injected into the void via the sealant injection tool 140. This provides a high-quality environmental seal to prevent moisture ingress, partial discharges and flashover, and, in some instances, it can remove the need for semiconducting layers by eliminating air voids and creating uniform electrical stresses. As mentioned above, a vacuum mechanism or vibration mechanism can be activated before, during, and/or after the sealant injection process in order to remove or reduce air bubbles that may have formed in the sealant. Finally, the automated cable preparation device 100 can be removed from the spliced medium voltage cable 10 without disturbing the medium voltage cable 10 by sliding the chassis 110 off of the medium voltage cable 10 and selectively hingedly opening and removing the carriage assembly 120.

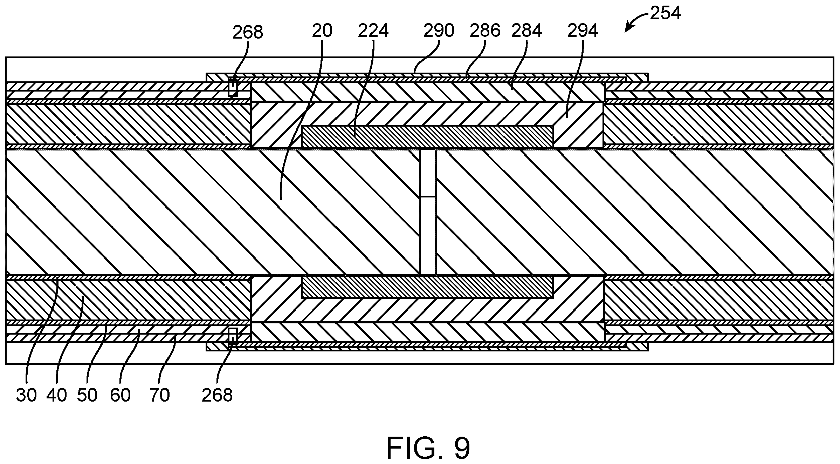

FIGS. 8A-9 illustrate the final, spliced medium voltage cable 10 according to embodiments disclosed herein. At the spliced location, the arrangement of layers within the medium voltage cable 10 is as follows. The splice joint 224 is mechanically secured around the outside of the conductor 20, a layer of cured insulative sealant 294 surrounds the splice joint 224 and/or part of the conductor 20, and the cable shell 254 includes a shell inner layer 284, a shell shield layer 286, and an insulated shell outer layer 290. As best shown in FIG. 9, the fastened cable shell 254 partially overlaps the outer insulating jacket 70 on both ends of the stripped splicing location of the medium voltage cable 10. The one or more spikes 268 extend through the outer insulating jacket 70 into the grounded shield layer 60, and the one or more spikes 268 are electrically connected to the shell shield layer 286, thus providing an electrically continuous ground. The shell inner layer 284 is an insulating layer, thus providing additional insulation between the conductor 20 and the shell shield layer 286.

With the precision cutting and stripping provided by the automated cable preparation device 100, the prepped location can be sized and shaped to accommodate a precise length dimension of the shell inner layer 284. Accordingly, a substantially continuous physical abutment between the outer insulating jacket 70, the grounded shield layer 60, and, in some forms, also the second semiconductor layer 50, the insulator layer 40, and the shell inner layer 284 can be provided. In some forms, the abutment is substantially perpendicular to the outer surface of the medium voltage cable 10.

In some embodiments, the automated cable preparation device 100 can also be used to strip and prep the medium voltage cable 10 for attachment with a stress cone or elbow cable fitting. In this instance, the automated cable preparation device 100 will cut the conductor 20 all the way through, and the automated cable preparation device 100 will be removed after cutting tool 125 has stripped away a predefined length of the layers of the medium voltage cable 10 surrounding the conductor 20. In some forms, the automated cable preparation device 100 can also provide a cable or attachment flange in order to facilitate connection of the grounded shield layer 60 to the ground of electrical equipment to which the medium voltage cable 10 is being newly attached or re-attached.

Referring further to the automated aspects of the disclosure, because the processor 150 of the automated cable preparation device 100 is in communication with and provides selective control of the rotational actuators 115A, 115B, 115C, the at least one splice actuator 220, the at least one cutting actuator 216, the at least one cable shell installation apparatus 135, the sealant injection tool 140, the one or more chassis linear actuators, the tool plate actuator 190, and the motor 145, the processor 150 can be programmed to perform any or all of the steps described above in an automated fashion. For example, the processor 150 can be provided in the form of a non-transitory computer readable medium that can store and execute programmed instructions to cut and strip the medium voltage cable 10 as described above, install the splice joint 224 as described above, install the fastened cable shell 254 as described above, and inject the sealant as described above. These and any other method steps described in the foregoing disclosure can be provided in the form of individual, repeatable, and/or adjustable steps and/or a continuous, fully automated process. Instructions to perform any or all of the disclosed method steps can be initiated via instructions input by a user via the user interface 272, which can be connected via a wired connection to the processor 150 or sent via wireless communication from the user interface 272 from a remote location directly to the processor 150, or indirectly through a cloud network 280 and/or gateway 276 to the processor 150.

Accordingly, the automated cable preparation device 100 and method disclosed herein provides precise, automated, medium voltage cable preparation and splicing, which reduces error, time consuming cable splicing techniques, and reduces the amount of input materials, among other benefits. In other embodiments, other configurations are possible. For example, those of skill in the art will recognize, according to the principles and concepts disclosed herein, that various combinations, sub-combinations, and substitutions of the components discussed above can provide appropriate cooling for a variety of different configurations of motors, actuators, electronic assemblies, and so on, under a variety of operating conditions. Thus, the invention is not intended to be limited to the embodiments shown herein but is to be accorded the widest scope consistent with the principles and novel features disclosed herein.

## Claims

1. An automated cable preparation device comprising:
a carriage assembly;
a mechanical splice installation tool including a splice actuator, the mechanical splice installation tool being coupled to the carriage assembly;
a cable shell installation apparatus including a cable shell actuator, the cable shell installation apparatus being coupled to the carriage assembly;
a sealant injection tool coupled to the carriage assembly; and
a processor in communication with the splice actuator, the cable shell actuator, and the sealant injection tool, the processor configured to:
selectively control the mechanical splice installation tool to deposit a mechanical splice joint onto an exposed conductor of an electrical cable,
selectively control the cable shell installation apparatus to install a cable shell onto the electrical cable, and
selectively control the sealant injection tool to inject a sealant into the installed cable shell.

2. The automated cable preparation device of claim 1, wherein the carriage assembly is coupled to a rotational actuator that is configured to rotate the carriage assembly about a longitudinal axis.

3. The automated cable preparation device of claim 1 or 2, wherein the carriage assembly includes a tool plate that is axially movable.

4. The automated cable preparation device of claim 3, wherein
the carriage assembly includes a first portion hingedly connected to a second portion, and
the tool plate includes a third portion hingedly connected to a fourth portion.

5. The automated cable preparation device of claim 3 or 4, wherein one or more of the mechanical splice installation tool, the cable shell installation apparatus, or the sealant injection tool is coupled to the tool plate.

6. The automated cable preparation device of any one of claims 1 to 5, wherein the cable shell includes a shell shield layer and one or more spikes that are configured to electrically connect the shell shield layer to a grounded shield layer of the electrical cable.

7. The automated cable preparation device of any one of claims 1 to 6, wherein the cable shell installation apparatus includes an air relief port.

8. The automated cable preparation device of claim 7, wherein the cable shell installation apparatus includes one or more of a vacuum or vibration mechanism to assist in removing air bubbles from the sealant injected into the cable shell.

9. The automated cable preparation device of any one of claims 3 to 8, further comprising a cutting tool coupled to the tool plate.

10. The automated cable preparation device of claim 9, wherein the cutting tool includes
a cable cutter, and
a cutting actuator in communication with the processor.

11. The automated cable preparation device of claim 9 or 10, wherein the processor is configured to selectively control the cutting tool to cut through at least one layer of the electrical cable and expose the conductor of the electrical cable.

12. The automated cable preparation device of any one of claims 9 to 11, further comprising a motor coupled to the carriage assembly and in communication with the processor, wherein the processor is configured to selectively control the cutting tool and the motor to circumferentially cut the electrical cable.

13. The automated cable preparation device of any one of claims 2 to 12, wherein the rotational actuator is in a planetary gear arrangement with a chassis.

14. The automated cable preparation device of any one of claims 3 to 13, wherein
the carriage assembly includes a first end plate and a second end plate, and
the tool plate is disposed between the first end plate and the second end plate.

15. A method of preparing and splicing an electrical cable comprising:
providing an automated cable preparation device having a carriage assembly, a mechanical splice installation tool, a cutting tool, a cable shell installation apparatus, and a sealant injection tool;
positioning the automated cable preparation device around the electrical cable and at least partially enclosing the electrical cable;
cutting into one or more outer layers of the electrical cable to expose a conductor;
depositing a mechanical splice joint onto the conductor;
installing a cable shell onto the electrical cable around the deposited mechanical splice joint; and
injecting a sealant into the cable shell.
